**Europäisches Patentamt**

**European Patent Office**

**Office européen des brevets**

(19)

(11) Veröffentlichungsnummer : **0 323 823 B1**

(12) **EUROPÄISCHE PATENTSCHRIFT**

(45) Veröffentlichungstag der Patentschrift :
04.03.92 Patentblatt 92/10

(51) Int. Cl.$^5$ : **A61C 8/00**

(21) Anmeldenummer : **88890326.7**

(22) Anmeldetag : **21.12.88**

(54) **Implantat zur Befestigung von Zahnprothesen.**

(30) Priorität : **04.01.88 AT 4/88**

(43) Veröffentlichungstag der Anmeldung :
**12.07.89 Patentblatt 89/28**

(45) Bekanntmachung des Hinweises auf die
Patenterteilung :
**04.03.92 Patentblatt 92/10**

(84) Benannte Vertragsstaaten :
**BE CH DE ES FR GB GR IT LI LU NL SE**

(56) Entgegenhaltungen :
**EP-A- 0 126 624**
**DE-A- 3 533 395**

(73) Patentinhaber : **METALL- UND
KUNSTSTOFFWAREN
ERZEUGUNGSGESELLSCHAFT M.B.H.
Am Hof 2
A-1010 Wien (AT)**

(72) Erfinder : **Schneider, Rudolf
Neuteichstrasse 23
A-3860 Heidenreichstein (AT)**

(74) Vertreter : **Müllner, Erwin, Dr. et al
Patentanwälte Dr. Erwin Müllner Dipl.-Ing.
Werner Katschinka Postfach 159
Weihburggasse 9
A-1010 Wien (AT)**

## Beschreibung

Die Erfindung betrifft ein Implantat zur Befestigung von Zahnprothesen, bestehend aus Primär- und Sekundärteil, wobei der Primärteil zur Verankerung im Kieferknochen vorgesehen ist und der die Suprakonstruktion tragende Sekundärteil in eine Ausnehmung des Primärteiles, insbesondere durch einen Einlegestift verdrehgesichert und in radialer Richtung mit Spiel einsetzbar ist, wobei mindestens ein O-Ring od.dgl. den radialen Abstand zwischen Primärteil und Sekundärteil kraft-und wegdefiniert elastisch überbrückt.

Es sind Implantate bekannt, wie zum beispiel EP-A-126624 oder DE-B-3533395, deren Sekundärteile durch ein begrenztes Spiel gegenüber den im Knochen sitzenden Primärteilen eine Beweglichkeit aufweisen, welche der natürlichen Zahnbeweglichkeit entspricht. Eine bekannte Ausführung sieht vor, daß auf einem in den Primärteil eingreifenden Zapfen des Sekundärteiles zwei O-Ringe in Ringnuten sitzen, die beim Ineinanderschieben der Teile in Ringnuten der Ausnehmung im Primärteil einrasten. Dies ermöglicht die oben erwähnte elastische Lagerung. Nachteilig wird bei dieser Ausführung empfunden, daß die gegenseitige Fixierung der Teile nur über die elastischen O-Ringe ohne speziell einstellbare Haltekräfte erfolgt. Werden die Abmessungen so gewählt, daß die sich ergebenden Haltekräfte groß sind, dann ist ein späteres Abziehen des Sekundärteiles ohne Herausziehen des Primärteiles oft nicht möglich. Auch besteht die Gefahr, daß beim Zusammenstecken die O-Ringe aus ihrer Position verschoben werden. Letzlich ergeben sich bei der genannten Ausführungsform noch Abdichtungsprobleme zwischen dem Primär- und dem Sekundärteil.

Die Erfindung zielt darauf ab, das Einsetzen wie auch die nötige Entnahme des Sekundärteiles vor dem Einwachsen des Primärteiles zu erleichtern und sowohl eine bessere Fixierung als auch eine bessere Abdichtung zu gewährleisten. Dies wird erfindungsgemäß dadurch erreicht, daß in einer axialen Bohrung des Sekundärteiles ein stirnseitig mit einer formschlüssigen Verbindung, insbesondere einem Schlitz zum Ansetzen eines Schraubendrehers ausgebildeter Gewindebolzen vorgesehen ist, bei dessen Verdrehung ein auf dem Gewindebolzen sitzender Andruckring gegen den Sekunrädteil in axialer Richtung, vorzugsweise bis zu einem Endanschlag, verstellbar ist und zwischen Andruckring und Sekundärteil, insbesondere an einer Abschrägung, der O-Ring eingelegt ist, der sich bei Verdrehen des Gewindebolzens und Annährung des Andruckringes an den Sekundärteil bzw. den Endanschlag in radailer Richtung kraftschlüssig an die Innenwand der Ausnehmung des Primärteiles legt. Der O-Ring bzw. elastische Dichtungsring wird nach Ineinanderstecken von Sekundär- und Primärteil in radialer Richtung im Sinne einer Durchmesservergrößerung verformt. Die Verformung und damit die Haltekräfte sind durch den Gewindebolzen mittels des Schraubendrehers einstellbar. Es ist zweckmäßig, wenn der Gewindebolzen in einer Gewindebohrung des Sekundärteiles verstellbar angeordnet ist und auf einem den Sekundärteil überragenden Absatz des Gewindebolzens der Andruckring aufliegt, dessen Außendurchmessser mit Spiel dem Innendurchmesser der Ausnehmung des Primärteiles gegenüberliegt und der die Schrägfläche zur radialen Verformung des O-Ringes trägt. Wird der Gewindebolzen etwas eingeschraubt, dann wird die Verbindung gelöst, wird der Gewindebolzen etwas herausgeschraubt, dann wird die Verbindung hergestellt. Eine besonders vorteilhafte Ausführungsform sieht vor, daß im Primärteil dem O-Ring etwa gegenüberliegend eine gegen das Innere des Primärteiles weisende Anlagefläche vorgesehen ist, an welche sich der O-Ring bei seiner radialen Verformung unter axialer Verschiebung des Sekundärteiles gegen das Innere des Primärteiles anlegt. Während der radialen Expansion des O-Ringes treten somit nicht nur radiale Haltekräfte auf, sondern durch das Anpressen an die gegebenenfalls schräge Anlagefläche auch axiale Kräfte, die ein weiteres Ineinandergreifen von Sekundärteil und Primärteil bewirken. Die Anlagefläche kann Teil einer Ringnut im Primärteil sein. Dabei ist es vorteilhaft, wenn im Randbereich der Ausnehmung des Primärteiles ein weiterer O-Ring bzw. Dichtungsring, vorzugsweise in einer Nut des Primärteiles eingelegt ist und wenn der Sekundärteil bei festgezogenem Gewindebolzen mit Spiel dem Randbereich des Primärteiles gegenüberliegt. Infolge des Hineinziehens des Sekundärteiles in den Primärteil bei Betätigung des Gewindebolzens legt sich der Sekundärteil dichtend an den eingelegten weiteren O-Ring bzw. Dichtungsring an, wobei aber jedenfalls ein Abstand zwischen dem Primärteil und dem Sekundärteil zur Gewährleistung der Zahnbeweglichkeit verbleibt. Um einen besonders guten Halt der beiden Teile des Implantates zu gewährleisten, ist der Gewindebolzen in axialer Richtung über den aufsitzenden Andruckring hinaus zu einem Zentrierstift verlängert und greift in eine Bohrung des Primärteiles ein.

Ein Ausführungsbeispiel des erfindungsgemäßen Implantates ist in der Schnittzeichnung dargestellt. Ein zum Einbohren in den Kieferknochen vorgesehener Primärteil 1 weist eine zentrale Ausnehmung 2 auf, in welche ein die Suprakonstruktion tragender Sekundärteil 3 eingesetzt ist. Der Sekundärteil 3 trägt eine axiale Gewindebohrung 4, in welcher ein Gewindebolzen 5 mit einem in einen Zentrierstift 6 erweiterten Kopf eingeschraubt ist. Ein Schlitz 7 im Gewindebolzen 5 ermöglicht das Ansetzen eines Schraubendrehers. Ein Andruckring 8 liegt auf einem Absatz 9 zwischen Gewindebolzen 5 und Zentrierstift 6 auf und bewegt sich in axialer Richtung bei Verdrehen des Gewindebolzens 5. Der Andruckring 8 ist auf der dem Absatz 9 gegenüberliegenden Seite mit einer Schrägfläche 10 ausgestattet. Zwischen dieser und einer Stirnfläche des Sekundärteiles ist ein O-Ring 11 eingelegt. Wird der Andruckring 8 durch Hochschrauben des Gewindebolzens 5 gegen die vorgenannte Stirnfläche bewegt, dann wird der O-Ring 11 radial nach außen gedrückt. Er legt sich gegen die Innenwand der Ausnehmung 2 im Primärteil 1,die an dieser Stelle eine Ringnut 12 aufweist. Der O-Ring 11 wird elastisch verformt und drückt infolge seines Anliegens an der Anlagefläche, die Teil der Ringnut 12 ist, den Sekundärteil 3 tiefer in die Ausnehmung des Primärteiles 1 hinein (axiale Kraftkomponente).

Im Randbereich der Ausnehmung 2 ist ein Dichtungsring, beispielsweise ein weiterer O-Ring 13 vorgesehen, der sich beim Festziehen des Sekundärteiles 3 dichtend an den Sekundärteil 3 anlegt. Es verbleibt zwischen Primärteil 1 und Sekundärteil 3 ringsum ein Spalt, der eine geringfügige relative Bewegung der beiden Teile gegeneinander im Sinne der natürlichen Zahnbeweglichkeit ermöglicht. Dennoch sind die Teile gegeneinander gut abgedichtet. Ein gegenseitiges Verdrehen wird durch den Einlegestift 14 verhindert, der in eine axiale Nut 15 in der Innenwand der Ausnehmung 2 eingreift. Der Zentrierstift 6 bzw. -kopf greift in eine Bohrung 16 im Primärteil 1 ein und unterstützt so die Festigkeit der Gesamtausbildung.

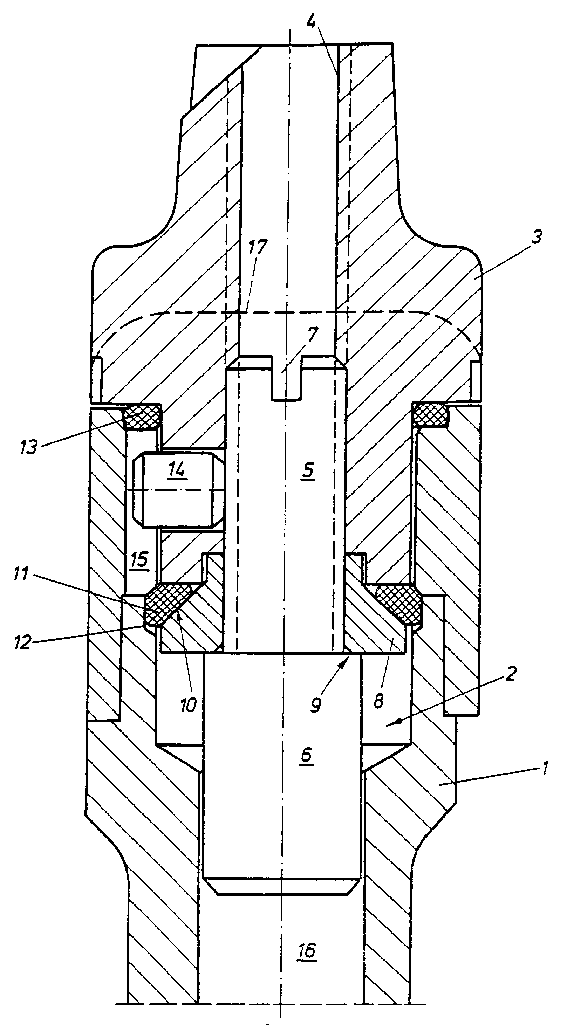

Um definierte Haltekräfte zu gewährleisten, wird der Gewindebolzen 5 so weit angezogen, bis der Andruckring 8 an den Sekundärteil 3 anliegt. Diese in der Figur dargestellte Position entspricht einer bestimmten Verformung des O-Ringes und gewährleistet eine stes gleichbleibende Haltekraft auch dann, wenn der Sekundärteil 3 mehrfach vom Primärteil 1 abgenommen wurde. Das Einsetzen und Trennen der beiden Teile kann ohne wesentlichen Kraftaufwand nachwirkungsfrei für den Primärteil 1 erfolgen.

Um eine einwandfreie Einwuchsperiode zu gewährleisten, wird bei der Implantation der Implantatunterteil mit einer eigenen Verschlußkappe 17 (strichliert dargestellt) über der das Zahnfleisch vernäht wird, verschlossen. Die Kappe 17 ist mit dem gleichen Befestigungssystem wie ein Implantatoberteil ausgestattet. Dadurch kann die unbeabsichtigte Lockerung des noch nicht 100 %ig festgewachsenen Implantatunterteils zur Zeit.wo die Suprakonstruktion angepaßt wird, verhindert werden.

**Patentansprüche**

1. Implantat zur Befestigung von Zahnprothesen, bestehend aus Primär- und Sekundärteil, wobei der Primärteil zur Verankerung im Kieferknochen vorgesehen ist und der die Suprakonstruktion tragende Sekundärteil in eine Ausnehmung des Primärteiles, insbesondere durch einen Einlegestifte verdrehgesichert und in radialer Richtung mit Spiel einsetzbar ist, wobei mindestens ein O-Ring od.dgl. den radialen Abstand zwischen Primärteil und Sekundärteil kraft- oder wegdefiniert elastisch überbrückt, dadurch gekennzeichnet, daß in einer axialen Bohrung (4) des Sekundärteiles (3) ein stirnseitig mit einer formschlüssigen Verbindung, insbesondere einem Schlitz (7) zum Ansetzen eines Schraubendrehers ausgebildeter Gewindebolzen (5) vorgesehen ist, bei dessen Verdrehung ein auf dem Gewindebolzen (5) sitzender Andruckring (8) gegen den Sekundärteil (3) in axialer Richtung, vorzugsweise bis zu einem Endanschlag, verstellbar ist und zwischen Andruckring (8) und Sekundärteil (3), insbesondere an einer Abschrägung (10), der O-Ring (11) eingelegt ist, der sich bei Verdrehen des Gewindebolzens (5) und Annäherung des Andruckringes (8) an den Sekundärteil (3) bzw. den Endanschlag in radialer Richtung kraftschlüssig an die Innenwand der Ausnehmung (2) des Primärteiles (1) legt.

2. Implantat nach Anspruch 1, dadurch gekennzeichnet, daß der Gewindebolzen (5) in einer Gewindebohrung (4) des Sekundärteiles (3) verstellbar angeordnet ist und auf einem den Sekundärteil (3) überragenden Absatz (9) des Gewindebolzens (5) der Andruckring (8) aufliegt, dessen Außendurchmesser mit Spiel dem Innendurchmesser der Ausnehmung (2) des Primärteiles (1) gegenüberliegt und der die Schrägfläche (10) zur radialen Verformung des O-Ringes (11) trägt.

3. Implantat nach den Ansprüchen 1 doer 2, dadurch gekennzeichnet, daß im Primärteil (1) dem O-Ring (11) etwa gegenüberliegend eine gegen das Innere des Primärteiles (1) weisende Anlagefläche vorgesehen ist, an welche sich der O-Ring (11) bei seiner radialen Verformung unter axialer Verschiebung des Sekundärteiles (3) gegen das Innere des Primärteiles (1) anlegt.

4. Implantat nach Anspruch 3, dadurch gekennzeichet, daß die Anlagefläche Teil einer Ringnut (12) im gegebenenfalls mehrteilig ausgebildeten Primärteil (1) ist.

5. Implantat nach einem der Ansprüche 1 bis 4, dadurch gekennzeichnet, daß im Randbereich der Ausnehmung (2) des Primärteiles (1) ein weiterer O-Ring (13) bzw. Dichtungsring, vorzugsweise in einer Nut des Primärteiles (1) eingelegt ist und daß der Sekundärteil (3) bei festgezogenem Gewindebolzen (5) mit Spiel dem Randbereich des Primärteiles (1) gegenüberliegt.

6. Implantat nach einem der Ansprüche 1 bis 5, dadurch gekennzeichnet, daß der Gewindebolzen (5) in axialer Richtung über den aufsitzenden Andruckring (8) hinaus zu einem Zentrierstift (6) verlängert ist, der in eine Bohrung (16) des Primärteiles (1) eingreift.

## Claims

1. Implant for securing artificial teeth, consisting of a primary and secondary part, in which the primary part is provided for anchoring in the jaw bone and the superconstruction-supporting secondary part can be inserted in a recess of the primary part, especially by means of inserting pins, so as to be secured against twisting and with play in the radial direction, in which at least one O-ring or the like bridges elastically by force or displacement the radial gap between primary part and secondary part, **characterised** in that in one of the axial drillings (4) of the secondary part (3) is provided a threaded pin (5) which on the front face has an interlocking connection, especially a slot (7) for receiving a screw driver, the twisting of the threaded pin (5) causes a pressure ring (8) seated on the threaded pin (5) to be adjustable in the axial direction against the secondary part (3), preferably up to an end stop, and between pressure ring (8) and secondary part (3), especially a slope (10), is placed the O-ring (11) which, when the threaded pin (5) is rotated and the pressure ring (8) approaches the secondary part (3) or the end stop, is positioned against the inner wall of the recess (2) of the primary part (1) in a force-locking manner in the radial direction.

2. Implant according to claim 1, characterised in that the threaded pin (5) is adjustably arranged in a threaded drilling (4) of the secondary part (3) and on a shoulder (9) of the threaded pin (5) projecting over the secondary part (3) is placed the pressure ring (8) whose outer diameter is situated with play opposite the inner diameter of the recess (2) of the primary part (1) and which supports the sloping area (10) for radially deforming the O-ring (11).

3. Implant according to one of the claims 1 or 2, **characterised** in that in the primary part (1) situated approximately opposite the O-ring is provided a contact surface pointing towards the inside of the primary part (1), against which contact surface is placed the O-ring (11) during its radial deformation while axially displacing the secondary part (3) against the inside of the primary part (1).

4. Implant according to claim 3, **characterised** in that the contact surface is part of an annular groove (12) in the primary part (1) which, if necessary, can be constructed in several parts.

5. Implant according to one of the claims 1 to 4, **characterised** in that in the edge region of the recess (2) of the primary part (1) is inserted a further O-ring (13) or sealing ring, preferably in a groove of the primary part (1), and that when the threaded pin (5) is tightened, the secondary part (3) is situated with play opposite the edge region of the primary part (1).

6. Implant according to one of the claims 1 to 5, **characterised** in that the threaded pin (5) is extended in the axial direction beyond the seated pressure ring (8) to form a centering pin (6) which engages in a bore (16) of the primary part (1).

## Revendications

1. Implant pour la fixation de prothèses dentaires constitué par une pièce primaire et par une pièce secondaire, la pièce primaire étant prévue pour être ancrée dans l'os de la mâchoire et la pièce secondaire portant la superstructure pouvant être mise en place dans un évidement de la pièce primaire, en particulier en étant bloquée à l'encontre de la rotation, au moyen d'une tige encastrée, et présentant un jeu dans le sens radial, au moins un joint torique, ou similaire, pontant élastiquement l'espace radial entre la pièce primaire et la pièce secondaire de façon définie du point de vue de la force et du déplacement, caractérisé en ce que dans un alésage axial (4) de la pièce secondaire (3), est prévu un boulon fileté (5) à liaison de forme frontale, particulier une fente (7) destinée à la mise en place d'un tournevis, en ce que, lors de la mise en rotation du boulon fileté, une bague d'appui (8) montée sur le boulon fileté (5) étant susceptible d'être déplacée dans la direction axiale contre la pièce secondaire (3), de préférence jusqu'à une butée d'extrémité, et en ce qu'entre la bague d'appui (8) et la pièce secondaire (3) est disposé, en particulier sur une surface oblique (10), le joint torique (11) qui, lors de la rotation du boulon fileté (5) et du rapprochement de la bague d'appui (8) contre la pièce secondaire (3), ou contre la butée d'extrémité, se place, par une liaison à force dans la direction radiale, contre la paroi intérieure de l'évidement (2) de la pièce primaire (1).

2. Implant selon la revendication 1, caractérisé en ce que le boulon fileté (5) est monté réglable dans un alésage fileté (4) de la pièce secondaire (3) et en ce que la bague d'appui (8) s'appuie sur un épaulement (9) qui dépasse de la pièce secondaire (3) et en ce que son diamètre extérieur correspond avec jeu au diamètre intérieur de l'évidement (2) de la pièce primaire (1), et porte la surface oblique (10) servant à la déformation du joint torique (11).

3. Implant selon la revendication 1 ou 2, caractérisé en ce qu'il est prévu dans la pièce primaire (1), approximativement en face du joint torique (11), une surface d'appui orientée vers l'intérieur de la pièce primaire (1), sur laquelle s'appuie le joint torique (11) lors de sa déformation radiale, par suite du glissement axial de la pièce secondaire (3) à l'intérieur de la pièce primaire (1).

4. Implant selon la revendication 3, caractérisé en ce que la surface d'appui est constituée par une partie d'une gorge annulaire (12) ménagée dans la pièce primaire (1) réalisée le cas échéant en plusieurs parties.

5. Implant selon l'une des revendications 1 à 4, caractérisé en ce que dans la zone de bord de l'évidement (2) de la pièce primaire (1) un autre joint torique (13) ou bague d'étanchéité, est mis en place, de préférence dans une gorge de la piéce primaire (1), et de la pièce secondaire (3) est située en face de la zone de bord de la pièce primaire (1) en ménageant un jeu, lorsque le boulon fileté (5) est vissé à fond.

6. Implant selon l'une des revendications 1 à 5, caractérisé en ce que le boulon fileté (5) est prolongé dans la direction axiale au-delà de la bague d'appui (8) en appui pour former une tige de centrage (6) qui pénètre dans un alésage (16) de la pièce primaire (1).

EP 0 323 823 B1